# EUROPEAN PATENT APPLICATION

(11) **EP 3 943 563 A1**
(43) Date of publication of application: **26.01.2022**
(21) Application number: 20773868.3
(22) Date of filing: 13.03.2020
(51) Int. Cl.: C09J 4/00, C09J 11/06, C09J 163/00

(54) **ADHESIVE COMPOSITION, CURED MATERIAL AND COMPOSITE**

(30) Priority: 18.03.2019 JP 2019050094
(71) Applicant: ThreeBond Co., Ltd., Tokyo 192-0398 (JP)
(72) Inventor: OTSUKI, Naoya, Hachioji-shi, Tokyo 192-0398 (JP)
(74) Representative: Haseltine Lake Kempner LLP
(86) International application number: PCT/JP2020/011240
(87) International publication number: WO 2020/189579

(57) **Abstract**

An object of the present invention is to provide an adhesive composition that causes less warpage when dissimilar materials are bonded together, and has excellent adhesive strength. The present invention relates to an adhesive composition comprising a component (A) that is a monofunctional epoxy resin, a component (B) that is a polyfunctional radically polymerizable compound, a component (C) that is a curing agent, and a component (D) that is a thermal radical initiator, the component (C) being one or more selected from the group consisting of a component (c-1) that is an epoxy adduct-type latent curing agent, a component (c-2) that is a hydrazide compound, a component (c-3) that is a cyclic amidine salt, and a component (c-4) that is a thermal cationic polymerization initiator.

## Description

### TECHNICAL FIELD

The present invention relates to an adhesive composition, a cured product, and a composite.

### BACKGROUND ART

In recent years, for reducing the weight of automobiles, multi-materialization for vehicle bodies using materials such as aluminum, magnesium, fiber reinforced plastic (FRP), carbon fiber reinforced plastic (CFRP), and the like has progressed. One of problems for progressing of the multi-materialization is joining dissimilar materials. Typical techniques for joining dissimilar materials include welding joining, mechanical joining, and adhesive joining.

Adhesives for adhesive joining include a urethanebased adhesive, epoxy resin-based adhesive, phenol resin-based adhesive, modified silicone-based adhesive, and the like. Among the above, an epoxy resin-based adhesive has attracted attention because it is excellent in adhesive strength, high strength, and heat resistance.

JP 2015-196326 A (corresponding to US 2015/0275382 A) discloses that an epoxy resin-based adhesive can be used in a caulking portion (hemming) for fixing an outer panel and an inner panel to a door of an automobile.

JP 2014-091789 A (corresponding to US 2015/0284607 A) discloses that a heat-curable epoxy resin-based adhesive can be used for joining a steel body member and an aluminum roof.

JP 2009-108278 A discloses that a weld bond method, which is a joining method using spot welding and an adhesive in combination, is used in a vehicle body manufacturing line, and an epoxy resin-based adhesive can be used as the adhesive.

### SUMMARY OF INVENTION

However, in the case where dissimilar materials such as steel and aluminum, and the like were stuck to each other using the epoxy resin-based adhesive disclosed in JP 2015-196326 A (corresponding to US 2015/0275382 A), JP 2014-091789 A (corresponding to US 2015/0284607 A), and JP 2009-108278 A, there have been a problem that warpage has occurred in the member after curing of the adhesive because there is a difference between linear expansion coefficients of the dissimilar materials.

The present invention has been made in view of the above circumstances, and an object of the present invention is to provide an adhesive composition that causes less warpage and has excellent adhesive strength when bonding dissimilar materials together.

The gist of the present invention will be described below. An embodiment of the present invention relates to the following [1].
[1] An adhesive composition containing:
   a component (A) that is a monofunctional epoxy resin;
   a component (B) that is a polyfunctional radically polymerizable compound;
   a component (C) that is a curing agent; and
   a component (D) that is a thermal radical initiator,
   the component (C) being one or more selected from the group consisting of a component (c-1) that is an epoxy adduct-type latent curing agent, a component (c-2) that is a hydrazide compound, a component (c-3) that is a cyclic amidine salt, and a component (c-4) that is a thermal cationic polymerization initiator.

   In addition, the present invention includes the following embodiments [2] to [15] as non-limiting examples of preferred embodiments.
[2] The adhesive composition according to [1], containing 5 to 200 parts by mass of the component (B) relative to 100 parts by mass of the component (A).
[3] The adhesive composition according to [1] or [2], in which the component (B) is a polyfunctional (meth)acrylate compound.
[4] The adhesive composition according to any one of [1] to [3], in which the component (A) contains at least one of a component (a-1) that is a monofunctional epoxy resin having an aromatic ring or cyclohexyl in the molecular structure and a component (a-2) that is a monofunctional epoxy resin having a linear or branched alkyl group with 7 to 25 carbon atoms.
[5] The adhesive composition according to [4], in which the component (A) contains the component (a-1) and the component (a-2).
[6] The adhesive composition according to [5], in which the component (A) contains 20 to 98 parts by mass of the component (a-1) relative to 100 parts by mass of the total amount of the component (a-1) and the component (a-2) .
[7] The adhesive composition according to any one of [1] to [6], further containing a monofunctional radically polymerizable compound as a component (E).
[8] The adhesive composition according to any one of [1] to [7], further containing a silane coupling agent as a component (F).
[9] The adhesive composition according to [8], in which the component (F) is a silicone oligomer-based silane coupling agent.
[10] The adhesive composition according to any one of [1] to [9], further containing a filler as a component (G) .
[11] The adhesive composition according to any one of [1] to [10], being free of a photoradical initiator.
[12] The adhesive composition according to any one of [1] to [11], being used for bonding between materials having different linear expansion coefficients.
[13] The adhesive composition according to [12], in which a difference in linear expansion coefficient between the materials having different linear expansion coefficients is 0.1 × 10⁻⁶/K to 500 × 10⁻⁶/K.
[14] A cured product of the adhesive composition according to any one of [1] to [13].
[15] A composite including two or more materials having different linear expansion coefficients and a cured product of the adhesive composition according to [14] and having a configuration such that the two or more materials having different linear expansion coefficients are bonded to each other via the cured product.

### BRIEF DESCRIPTION OF DRAWINGS

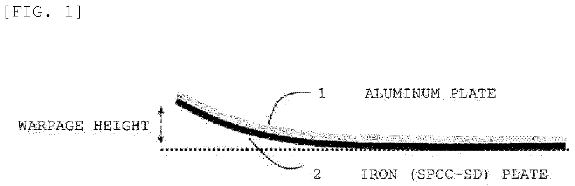

FIG. 1 is a diagram showing a method for measuring a warpage height in the (1) warpage test after heat-curing in sticking an aluminum plate and an iron (SPCC-SD) plate together. In FIG. 1, the symbol 1 represents an aluminum plate, and the symbol 2 represents an iron (SPCC-SD) plate.

### DESCRIPTION OF EMBODIMENTS

Details of the invention will be described below. Note that, in the present specification, "X to Y" is used to mean that the former and the latter numerical values (X and Y) are included as lower and upper limit values respectively and means "X or more and Y or less".

In addition, unless otherwise specified, operations and measurements of physical properties and the like are performed under the conditions of room temperature (20 to 25°C)/relative humidity 40 to 50% RH.

An aspect of the present invention relates to an adhesive composition containing:
a component (A) that is a monofunctional epoxy resin;
a component (B) that is a polyfunctional radically polymerizable compound;
a component (C) that is a curing agent; and
a component (D) that is a thermal radical initiator,
the component (C) being one or more selected from the group consisting of a component (c-1) that is an epoxy adduct-type latent curing agent, a component (c-2) that is a hydrazide compound, a component (c-3) that is a cyclic amidine salt, and a component (c-4) that is a thermal cationic polymerization initiator. According to an aspect of the present invention, it is possible to provide an adhesive composition that causes less warpage and has excellent adhesive strength when bonding dissimilar materials together.

Details of the invention will be described below.

### <Component (A)>

The component (A) contained in the adhesive composition of the present invention is a monofunctional epoxy resin. The monofunctional epoxy resin is a compound having only one epoxy group or glycidyl group in the molecule. By combining the component (A) with the other components of the present invention, an adhesive composition is obtained that causes less warpage when dissimilar materials are bonded together, and has excellent adhesive strength. Moreover, preferred examples of the component (A) include a component containing at least either a component (a-1) that is a monofunctional epoxy resin having an aromatic ring or cyclohexyl in the molecular structure or a component (a-2) that is a monofunctional epoxy resin having a linear or branched alkyl group with 7 to 25 carbon atoms, that is, a component containing at least one of the component (a-1) that is a monofunctional epoxy resin having an aromatic ring or cyclohexyl in the molecular structure and the component (a-2) that is a monofunctional epoxy resin having a linear or branched alkyl group with 7 to 25 carbon atoms. Among the above examples, it is particularly preferable that the component (a-1) and the component (a-2) are used in combination. Additionally, the component (A) is preferably a monofunctional epoxy resin having a branched alkyl group from the viewpoint of less warpage caused when dissimilar materials are bonded together.

Examples of the component (a-1) of the monofunctional epoxy resin having an aromatic ring or cyclohexyl in the molecular structure include, but are not particularly limited to, p-tert-butyl phenyl monoglycidyl ether, phenyl monoglycidyl ether, orthocresyl monoglycidyl ether, meta-/para-cresyl monoglycidyl ether, ortho-phenylphenol monoglycidyl ether, cyclohexyl monoglycidyl ether, and the like. Among the above examples, from the viewpoint that warpage is small when dissimilar materials are bonded together, and from the viewpoint that uniform dispersibility of the curing agent of the component (B) in the composition is improved and curability is excellent, p-tert-butylphenyl monoglycidyl ether, orthocresyl monoglycidyl ether, meta-/para-cresyl monoglycidyl ether, ortho-phenylphenol monoglycidyl ether, and the like are preferable, and p-tert-butylphenyl monoglycidyl ether is particularly preferable. These may be used alone, or two or more thereof may be used in combination.

Examples of a commercially available product for the component (a-1) include, but are not particularly limited to, ADEKA GLYCILOL (registered trademark) ED-509E and ED-509S manufactured by ADEKA Corporation; PGE, SY-OCG, m, p-CGE, and SY-OPG manufactured by Sakamoto Yakuhin Kogyo Co., Ltd.; EX141 manufactured by Nagase ChemteX Corporation; and the like. These may be used alone, or two or more thereof may be used in combination.

The component (a-2) that is a monofunctional epoxy resin having a linear or branched alkyl group with 7 to 25 carbon atoms is preferably, but not particularly limited to, a monofunctional epoxy resin having a linear or branched alkyl group with 8 to 20 carbon atoms. Moreover, a monofunctional epoxy resin having a branched alkyl group with 7 to 17 carbon atoms is particularly preferable from the viewpoint of even less warpage caused when dissimilar materials are bonded together. Examples of the component (a-2) include 2-ethylhexyl glycidyl ether, mixed higher alcohol glycidyl ether of C10 or C12, mixed higher alcohol glycidyl ether of C12 or C13, and the like. These may be used alone, or two or more thereof may be used in combination.

Examples of a commercially available product for the component (a-2) include, but are not particularly limited to, EPOGOSEY (registered trademark) EN, AN, and 2EH manufactured by Yokkaichi Chemical Co., Ltd.; EPOLYTE M-1230 manufactured by Kyoeisha Chemical Co., Ltd.; SY-25L, SY-35M, and SY-40M manufactured by Sakamoto Yakuhin Kogyo Co., Ltd.; YED188 manufactured by Mitsubishi Chemical Corporation; EX121 manufactured by Nagase ChemteX Corporation; and the like. These may be used alone, or two or more thereof may be used in combination.

When the component (a-1) and the component (a-2) are used in combination in the component (A), the component (A) preferably contains 20 to 98 parts by mass of the component (a-1) relative to 100 parts by mass of the total amount of the component (a-1) and the component (a-2). Moreover, the addition amount (blending amount) of the component (a-1) is more preferably 30 to 95 parts by mass, and still more preferably in the range of 40 to 93 parts by mass relative to 100 parts by mass of the total amount of the component (a-1) and the component (a-2). Moreover, the addition amount (blending amount) of the component (a-1) is even still more preferably 50 to 80 parts by mass, and particularly preferably 60 to 75 parts by mass relative to 100 parts by mass of the total amount of the component (a-1) and the component (a-2). When the addition amount is set to the above range, an adhesive composition is obtained that causes even less warpage when dissimilar materials are bonded together, and has more excellent adhesive strength.

### <Component (B)>

The component (B) contained in the adhesive composition of the present invention is a polyfunctional radically polymerizable compound. The polyfunctional radically polymerizable compound is a compound having two or more radically polymerizable functional groups in the molecule. Examples of the radically polymerizable functional group include, but are not particularly limited to, ethylenically unsaturated groups such as a (meth)acryloyl group, an allyl group, a vinyl group, and the like; and the like. As the component (B), a compound usually used for an adhesive, a paint, and the like can be used. Specifically, for example, a bi- or higher functional polyfunctional (meth)acrylate (polyfunctional (meth)acrylate compound) or the like can be used. In particular, it is preferable that a tetra-or higher functional (meth)acrylate is contained from the viewpoint that an adhesive composition having more excellent adhesive strength is obtained. In addition, it is preferable to use a tetra- or higher functional (meth)acrylate and a bi- and tri- functional (meth)acrylate in combination from the viewpoint of improving the reaction rate of curing and being able to obtain an adhesive composition having excellent adhesive strength between dissimilar materials.

Note that, in the present specification, an acryloyl group and a methacryloyl group are collectively referred to as a (meth)acryloyl group. In addition, in the present specification, (meth)acrylate means both acrylate and methacrylate. Moreover, a compound and the like including (meth), such as (meth) acrylic acid and the like is similarly a generic term for a compound having "meth" in the name and a compound not having" meth" in the name.

Examples of the bifunctional (meth)acrylate include, but are not particularly limited to, ethylene glycol di(meth)acrylate, diethylene glycol di(meth)acrylate, triethylene glycol di(meth)acrylate, tetraethylene glycol dimethacrylate, 1,6-hexanediol di(meth)acrylate, 1,9-nonanediol di(meth)acrylate, glycerin di(meth)acrylate, neopentyl glycol di(meth)acrylate, stearic acid-modified pentaerythritol di(meth)acrylate, dicyclopentenyl diacrylate, di(meth)acryloyl isocyanurate, alkylene oxide-modified bisphenol di(meth)acrylate, epoxy di(meth)acrylate, urethane di(meth)acrylate, and the like. Among the above examples, alkylene oxide-modified bisphenol di(meth)acrylate and epoxy di(meth)acrylate are preferable. Moreover, ethylene oxide-modified bisphenol A type diacrylate and bisphenol A type epoxy diacrylate are particularly preferable. These can be used alone or as a mixture of two or more thereof.

Examples of the trifunctional (meth)acrylate include, but are not particularly limited to, trimethylolpropane tri(meth)acrylate, pentaerythritol tri(meth)acrylate, tris(acryloyloxyethyl)isocyanurate, and the like. These can be used alone or as a mixture of two or more thereof.

Examples of the tetra- or higher functional (meth)acrylate include, but are not particularly limited to, ditrimethylolpropane tetra(meth)acrylate, pentaerythritol tetra(meth)acrylate, dipentaerythritol monohydroxypenta(meth)acrylate, alkyl-modified dipentaerythritol penta(meth)acrylate, dipentaerythritol hexa(meth)acrylate, urethane tetra(meth)acrylate, urethane hexa(meth)acrylate, and the like. Among the above examples, dipentaerythritol hexa(meth)acrylate is preferable, and dipentaerythritol hexaacrylate is particularly preferable. The above polymerizable monomers can be used alone or as a mixture of two or more thereof.

Additionally, as the component (B), a bifunctional (meth)acrylate and a tetra- or higher functional (meth)acrylate are preferably used in combination.

Examples of a commercially available product for the component (B) include, but are not particularly limited to, NK ESTER BPE-80N manufactured by Shin-Nakamura Chemical Co., Ltd.; EBECRYL 3700 manufactured by Daicel-Allnex Ltd.; KAYARAD (registered trademark) DPHA manufactured by Nippon Kayaku Co., Ltd.; and the like. These can be used alone or as a mixture of two or more thereof.

The addition amount (blending amount) of the component (B) is not particularly limited, but the adhesive composition preferably contains the component (B) in the range of 5 to 200 parts by mass relative to 100 parts by mass of the component (A). In addition, the addition amount of the component (B) is more preferably in the range of 10 to 150 parts by mass, and particularly preferably in the range of 30 to 120 parts by mass relative to 100 parts by mass of the component (A). When the addition amount is set to the above range, the toughness of the cured product is more excellent, and an adhesive composition having more excellent adhesive strength to dissimilar materials can be obtained.

In addition, when bifunctional (meth)acrylate and tetra- or higher functional (meth)acrylate are used in combination, the component (B) preferably contains 60 to 99.9 parts by mass of the bifunctional (meth)acrylate relative to 100 parts by mass of the total amount of the bifunctional (meth)acrylate and the tetra- or higher (meth)acrylate. Moreover, the addition amount (blending amount) of the bifunctional (meth)acrylate is more preferably 90 to 99.5 parts by mass, and still more preferably 95 to 99 parts by mass relative to 100 parts by mass of the total amount of the bifunctional (meth)acrylate and the tetra- or higher functional (meth)acrylate.

### <Component (C)>

The component (C) contained in the adhesive composition of the present invention is a curing agent and is one or more compounds selected from the group consisting of a component (c-1) that is an epoxy adduct-type latent curing agent, a component (c-2) that is a hydrazide compound, a component (c-3) that is a cyclic amidine salt, and a component (c-4) that is a thermal cationic polymerization initiator. By selecting the component (C) from a large number of curing agents and combining the component (C) with the other components of the present invention, an adhesive composition is obtained that causes less warpage when dissimilar materials are bonded together, and has excellent adhesive strength. These may be used alone, or two or more thereof may be used in combination.

The addition amount (blending amount) of the component (C) in the present invention is not particularly limited, but is preferably 0.1 to 100 parts by mass relative to 100 parts by mass of the component (A). In addition, the addition amount (blending amount) of the component (C) is more preferably 0.5 to 75 parts by mass, and still more preferably 1 to 60 parts by mass relative to 100 parts by mass of the component (A) . Moreover, the addition amount (blending amount) of the component (C) is even still more preferably 5 to 60 parts by mass, and particularly preferably 20 to 60 parts by mass relative to 100 parts by mass of the component (A). When the addition amount is set within the above-described range in the present invention, an adhesive composition can be obtained that causes even less warpage when dissimilar materials are bonded together, and has more excellent adhesive strength.

Examples of the component (c-1) that is an epoxy adduct-type latent curing agent include, but are not particularly limited to, a reaction product of an epoxy compound and an amine compound or the like, and the like. The amine compound is preferably, but not particularly limited to, an imidazole compound and a tertiary amine compound from the viewpoint of excellent adhesive strength to metals. Therefore, the component (c-1) is preferably an epoxy adduct-type latent curing agent obtained using a tertiary amine compound and an epoxy adduct-type latent curing agent obtained using an imidazole compound, and more preferably an epoxy adduct-type latent curing agent obtained using an imidazole compound. These may be used alone, or two or more thereof may be used in combination.

The softening point of the component (c-1) is not particularly limited, but is preferably lower than 125°C, more preferably 120°C or lower, and particularly preferably 117°C or lower. Within the above range, an adhesive composition is obtained that causes even less warpage when dissimilar materials are bonded together. Additionally, the softening point of the component (c-1) is preferably 50°C or higher from the viewpoint of more excellent storage stability of the adhesive composition. As a method for measuring the softening point of the component (c-1), a test in accordance with JISK7234 (JISK7234:1986) can be adopted, and the softening point of the component (c-1) can be determined by the test.

The average particle size of the component (c-1) is not particularly limited, but is preferably, for example, in the range of 0.1 to 100 µm. The average particle size of the component (c-1) is more preferably in the range of 1 to 30 µm, and particularly preferably in the range of 2 to 15 µm. Hereinafter, the average particle size refers to 50% average particle size. The method for measuring the average particle size of the component (c-1) is a laser diffraction/scattering method.

Examples of a commercially available product for the component (c-1) include, but are not particularly limited to, AMICURE PN-23, AMICURE PN-31, AMICURE PN-23J, AMICURE PN-31J, and AMICURE MY-24 manufactured by Ajinomoto Fine-Techno Co., Inc., and the like. In addition, these may be used alone or as a mixture. These may be used alone, or two or more thereof may be used in combination.

Examples of the component (c-2) that is a hydrazide compound include, but are not particularly limited to, 1,3-bis(hydrazinocarbonoethyl)-5-isopropylhydantoin, 7,11-octadecadiene-1,18-dicarbohydrazide, sebacic acid dihydrazide, dodecanediohydrazide, isophthalic acid dihydrazide, salicylic acid hydrazide, adipic acid dihydrazide, and the like. Among the above examples, 1,3-bis(hydrazinocarbonoethyl)-5-isopropylhydantoin is preferable. These may be used alone, or two or more thereof may be used in combination.

Examples of a commercially available product for the component (c-2) include, but are not particularly limited to, AMICURE UDH and VDH manufactured by Ajinomoto Fine-Techno Co., Inc.; ADH, SDH, DDH, IDH, and SAH manufactured by Otsuka Chemical Co., Ltd.; and the like. These may be used alone, or two or more thereof may be used in combination.

Examples of the component (c-3) that is a cyclic amidine salt include, but are not particularly limited to, phenol salt of DBU (1,8-diazabicyclo(5,4,0)-undec-7-ene), octylate of DBU, p-toluenesulfonate of DBU, formate of DBU, o-phthalate of DBU, a tetraphenylborate of a DBU derivative, a phenol novolac resin salt of DBU, a phenol novolac resin salt of DBN (1,5-diazabicyclo(4,3,0)-non-5-ene), and the like. Among the above examples, the phenol novolac resin salt of DBU and phenol novolac resin salt of DBN are preferable, and the phenol novolac resin salt of DBU is more preferable. These may be used alone, or two or more thereof may be used in combination.

Examples of a commercially available product for the component (c-3) include, but are not particularly limited to, U-CAT SA1, SA102, SA506, SA603, SA810, 5002, SA841, SA851, SA881, and SA891 manufactured by Sanyo Chemical Industries, Ltd., and the like. These may be used alone, or two or more thereof may be used in combination.

The component (c-4) is a thermal cationic polymerization initiator. The thermal cationic polymerization initiator is a compound that generates a cationic species by being heated.

Examples of the component (c-4) include, but are not particularly limited to, a thermal cationic polymerization initiator containing a salt composed of a hexafluoroantimonate anion and a cation, a thermal cationic polymerization initiator containing a salt composed of a hexafluorophosphate anion and a cation, a thermal cationic polymerization initiator containing a salt composed of a tetrakis(pentafluorophenyl)borate anion and a cation, a boron trifluoride derivative, and the like. Among the above examples, the thermal cationic polymerization initiator containing a salt composed of a tetrakis(pentafluorophenyl)borate anion and a cation and the boron trifluoride derivative are preferable from the viewpoint that an adhesive composition is obtained that causes less warpage when dissimilar materials are bonded together, and has excellent adhesive strength. Examples of the cation include, but are not particularly limited to, a quaternary ammonium cation, a sulfonium ion in which at least one of three groups bonded to a sulfur atom is an alkyl group with 1 to 8 carbon atoms, and the like. These may be used alone, or two or more thereof may be used in combination.

Preferable examples of the thermal cationic polymerization initiator containing a salt composed of a tetrakis(pentafluorophenyl)borate anion and a cation include a thermal cationic polymerization initiator containing a salt composed of a tetrakis(pentafluorophenyl)borate anion and a quaternary ammonium cation, and the like from the viewpoint that an adhesive composition is obtained that causes less warpage when dissimilar materials are bonded together, and has excellent adhesive strength. Examples of the boron trifluoride derivative include, but are not particularly limited to, boron trifluoride monomethylamine, boron trifluoride monoethylamine (boron trifluoride monoethylamine), boron trifluoride monopropylamine, and the like. Among the above examples, boron trifluoride monoethylamine is preferable. These may be used alone, or two or more thereof may be used in combination.

Examples of a commercially available product of the thermal cationic polymerization initiator containing a salt composed of a hexafluoroantimonate anion and a cation include, but are not particularly limited to, SI-60L, SI-80L, and SI-100L manufactured by Sanshin Chemical Industry Co., Ltd., and the like. In addition, examples of a commercially available product of the thermal cationic polymerization initiator containing a salt composed of a hexafluorophosphate anion and a cation include, but are not particularly limited to, SI-110L, SI-180L, SI-B2A, and SI-B3A manufactured by Sanshin Chemical Industry Co., Ltd., and the like. Moreover, examples of a commercially available product of the thermal cationic polymerization initiator containing a salt composed of a tetrakis(pentafluorophenyl)borate anion and a cation include, but are not particularly limited to, K-PURE (registered trademark) CXC-1821 manufactured by King Industries, Inc., and the like. Further, examples of a commercially available product of the boron trifluoride derivative include, but are not particularly limited to, boron trifluoride monoethylamine manufactured by Stella Chemifa Corporation, and the like. These may be used alone, or two or more thereof may be used in combination.

Among the components (c-1) to (c-4), the component (c-3) is preferable as the component (C).

### <Component (D)>

The component (D) contained in the adhesive composition of the present invention is a thermal radical initiator. Examples of the component (D) include, but are not particularly limited to, an organic peroxide. In addition, the component (D) is preferably a compound in which radical species are generated by heating at 50°C or higher (preferably 50°C or more and 250°C or less) from the viewpoint of more excellent storage stability of the adhesive composition.

Examples of the component (D) include, but are not particularly limited to, ketone peroxides such as methyl ethyl ketone peroxide, cyclohexanone peroxide, 3,3,5-trimethylcyclohexanone peroxide, methylcyclohexanone peroxide, methyl acetoacetate peroxide, and acetylacetone peroxide, and the like; peroxyketals such as 1,1-bis(t-butylperoxy)-3,3,5-trimethylcyclohexane, 1,1-bis(t-butylperoxy)cyclohexane, 2,2-bis(t-butylperoxy)octane, n-butyl-4,4-bis(t-butylperoxy)valerate, 2,2-bis(t-butylperoxy)butane, and the like; hydroperoxides such as t-butyl hydroperoxide, cumene hydroperoxide, diisopropylbenzene hydroperoxide, p-menthan hydroperoxide, 2,5-dimethylhexane-2,5-dihydroperoxide, 1,1,3,3-tetramethylbutyl hydroperoxide, and the like; dialkyl peroxides such as di-t-butyl peroxide, t-butyl cumyl peroxide, dicumyl peroxide, α,α'-bis(t-butylperoxy-m-isopropyl)benzene, 2,5-dimethyl-2,5-di(t-butylperoxy)hexane, 2,5-dimethyl-2,5-di(t-butylperoxy)hex-3-yne, and the like; diacyl peroxides such as acetyl peroxide, isobutyryl peroxide, octanoyl peroxide, decanoyl peroxide, lauroyl peroxide, 3,5,5-trimethylhexanoyl peroxide, succinic acid peroxide, benzoyl peroxide, 2,4-dichlorobenzoyl peroxide, m-toluoyl peroxide, and the like; peroxydicarbonates such as diisopropyl peroxydicarbonate, di-2-ethylhexyl peroxydicarbonate, di-n-propyl peroxydicarbonate, bis-(4-t-butylcyclohexyl)peroxydicarbonate, dimyristyl peroxydicarbonate, di-2-ethoxyethyl peroxydicarbonate, dimethoxyisopropyl peroxydicarbonate, di(3-methyl-3-methoxybutyl) peroxydicarbonate, diallyl peroxydicarbonate, and the like; peroxyesters such as t-butyl peroxyacetate, t-butyl peroxyisobutyrate, t-butyl peroxypivalate, t-butyl peroxyneodecanoate, cumyl peroxyneodecanoate, t-butyl peroxy-2-ethylhexanoate, t-butyl peroxy-3,5,5-trimethylhexanoate, t-butyl peroxylaurate, t-butyl peroxybenzoate, di-t-butyl peroxyisophthalate, 2,5-dimethyl-2,5-di(benzoylperoxy)hexane, t-butyl peroxymaleic acid, t-butylperoxy isopropyl carbonate, cumyl peroxyoctoate, t-hexyl peroxyneodecanoate, t-hexyl peroxypivalate, t-butyl peroxyneohexanoate, t-hexyl peroxyneohexanoate, cumyl peroxyneohexanoate, and the like; acetylcyclohexylsulfonyl peroxide; t-butyl peroxyallylcarbonate; and the like. Among the above examples, peroxyesters are preferably used, and t-butyl peroxybenzoate is particularly preferably used from the viewpoint that an adhesive composition is obtained that causes even less warpage when dissimilar materials are bonded together. The above organic peroxides may be used alone or in combination of two or more thereof.

The 1-hour half-life temperature of the component (D) is not particularly limited, but is preferably 50°C or higher, more preferably 55°C or higher, and still more preferably 60°C or higher from the viewpoint of more excellent storage stability of the adhesive composition. In addition, the 1-hour half-life temperature of the component (D) is not particularly limited, but is preferably 250°C or lower, more preferably 230°C or lower, still more preferably 210°C or lower, and particularly preferably 200°C or lower from the viewpoint of more excellent reactivity.

Examples of a commercially available product for the component (D) include, but are not particularly limited to, PERBUTYL (registered trademark) Z manufactured by NOF CORPORATION, and the like. Commercially available products for the component (D) may be used alone or in combination of two or more thereof.

The addition amount (blending amount) of the component (D) in the present invention is not particularly limited, but is preferably 0.05 to 15 parts by mass relative to 100 parts by mass of the component (B). In addition, the addition amount (blending amount) of the component (D) is more preferably 0.1 to 10 parts by mass, and still more preferably 0.31 to 5 parts by mass relative to 100 parts by mass of the component (B). Moreover, the addition amount (blending amount) of the component (D) is even still more preferably 0.4 to 3 parts by mass, and particularly preferably 0.5 to 1 parts by mass relative to 100 parts by mass of the component (B). When the addition amount is set within the above range in the present invention, the heat-curability of the adhesive composition and the heat resistance of the cured product can be favorably maintained, and the adhesive strength between dissimilar materials can be further improved.

### <Component (E)>

Further, to the adhesive composition according to an embodiment of the present invention, a monofunctional radically polymerizable compound may be added as a component (E). Moreover, the adhesive composition according to an embodiment of the present invention preferably further contains the monofunctional radically polymerizable compound as the component (E). The monofunctional radically polymerizable compound is a compound having only one radically polymerizable functional group in the molecule. Examples of the radically polymerizable functional group include, but are not particularly limited to, ethylenically unsaturated groups such as a (meth)acryloyl group, an allyl group, a vinyl group, and the like; and the like. As the component (E), a compound usually used for an adhesive, a paint, and the like can be used. Specifically, for example, a monofunctional (meth)acrylate (monofunctional (meth)acrylate compound) or the like can be used.

Examples of the monofunctional radically polymerizable compound include, but are not particularly limited to, a (meth)acrylate monomer having a linear or branched alkyl group with 5 to 30 carbon atoms, such as 2-ethylhexyl (meth)acrylate, octyl (meth)acrylate, isooctyl (meth)acrylate, decyl (meth)acrylate, dodecyl (meth)acrylate, isodecyl (meth)acrylate, lauryl (meth)acrylate, n-octadecyl (meth)acrylate, isooctadecyl (meth)acrylate, nonadecane (meth)acrylate, 3-heptyldecyl-1-(meth)acrylate, stearyl (meth)acrylate, and the like; a (meth)acrylate monomer having an alicyclic hydrocarbon group with 5 to 30 carbon atoms, such as dicyclopentanyl (meth)acrylate, dicyclopentenyl (meth)acrylate, dicyclopentenyloxy (meth)acrylate, isobornyl (meth)acrylate, and adamantyl (meth)acrylate, and the like; a hydroxyl group-containing (meth)acrylate monomer such as 2-hydroxyethyl (meth)acrylate, 2-hydroxypropyl (meth)acrylate, 4-hydroxybutyl (meth)acrylate, and the like; and a (meth)acrylate monomer having an aromatic ring, such as benzyl (meth)acrylate, phenyl (meth)acrylate, phenoxyethyl (meth)acrylate, phenoxydiethylene glycol (meth)acrylate, phenoxytetraethylene glycol (meth)acrylate, nonylphenoxyethyl (meth)acrylate, nonylphenoxytetraethylene glycol (meth)acrylate, nonylphenylpolypropylene glycol (meth)acrylate, and the like. These may be used alone or in combination of two or more thereof.

Among the components (E), a (meth)acrylate monomer having an alicyclic hydrocarbon group with 5 to 30 carbon atoms and a hydroxyl group-containing (meth)acrylate monomer are preferable from the viewpoint that an adhesive composition is obtained that causes even less warpage when dissimilar materials are bonded together, and has more excellent adhesive strength. In addition, isobornyl (meth)acrylate and 2-hydroxyethyl (meth)acrylate are particularly preferable. In addition, the use of a (meth)acrylate monomer having an alicyclic hydrocarbon group with 5 to 30 carbon atoms in combination with a hydroxyl group-containing (meth)acrylate monomer is preferable from the viewpoint that an adhesive composition having more excellent adhesive strength between dissimilar materials can be obtained. In this case, it is particularly preferable to use isobornyl (meth)acrylate and 2-hydroxyethyl (meth)acrylate in combination.

Examples of a commercially available product for the component (E) include, but are not particularly limited to, Acryester IBX and HO manufactured by Mitsubishi Rayon Co., Ltd., IBXA and 4-HBA manufactured by Osaka Organic Chemical Industry Ltd., and the like. These may be used alone or in combination of two or more thereof.

When the (meth)acrylate monomer having an alicyclic hydrocarbon group with 5 to 30 carbon atoms and the hydroxyl group-containing (meth)acrylate monomer are used in combination in the component (E), the component (E) preferably contains 10 to 90 parts by mass of the (meth)acrylate monomer having an alicyclic hydrocarbon group with 5 to 30 carbon atoms relative to 100 parts by mass of the total amount of the (meth)acrylate monomer having an alicyclic hydrocarbon group with 5 to 30 carbon atoms and the hydroxyl group-containing (meth)acrylate monomer. Moreover, the addition amount of the (meth)acrylate monomer having an alicyclic hydrocarbon group with 5 to 30 carbon atoms is more preferably 10 to 90 parts by mass, and particularly preferably in the range of 20 to 80 parts by mass relative to 100 parts by mass of the total amount of the (meth)acrylate monomer having an alicyclic hydrocarbon group with 5 to 30 carbon atoms and the hydroxyl group-containing (meth)acrylate monomer. When the addition amount is set to the above range, an adhesive composition having more excellent adhesive strength between dissimilar materials can be obtained.

The addition amount (blending amount) of the component (E) in an embodiment of the present invention is not particularly limited, but is preferably 3 to 200 parts by mass relative to 100 parts by mass of the component (A). In addition, the addition amount of the component (E) is more preferably 5 to 150 parts by mass, and still more preferably 7 to 100 parts by mass relative to 100 parts by mass of the component (A). Moreover, the addition amount of the component (E) is even still more preferably 10 to 50 parts by mass, and particularly preferably 15 to 30 parts by mass relative to 100 parts by mass of the component (A). When the addition amount is set within the above range in the present invention, appropriate strength can be maintained in the cured product of the adhesive composition, so that an adhesive composition more excellent in adhesive strength to dissimilar materials can be obtained.

### <Component (F)>

Further, to the adhesive composition according to an embodiment of the present invention, a silane coupling agent may be added as a component (F). Moreover, the adhesive composition according to an embodiment of the present invention preferably further contains a silane coupling agent as the component (F). The component (F) is a compound such that the condensation reaction proceeds by a base catalyst or an acid catalyst generated by heating the component (B) of the present invention and the adhesive strength to dissimilar materials can be further improved.

Among the components (F), a silicone oligomer-based silane coupling agent is preferable from the viewpoint that an adhesive composition is obtained that causes less warpage when dissimilar materials are bonded together, and has excellent adhesive strength. Examples of the silicone oligomer-based silane coupling agent include, but are not particularly limited to, silicone oligomers having one or more functional groups such as epoxy group, glycidyl group, (meth)acryloyl group, mercapto group, and the like and one or more alkoxy groups such as methoxy, ethoxy, and the like; and the like. Among the above, preferable examples include a silicone oligomer having epoxy group and methoxy group, a silicone oligomer having glycidyl group and methoxy group, a silicone oligomer having (meth)acryloyl group and methoxy group, and the like. In addition, the silicone oligomer having epoxy group and methoxy group, or the silicone oligomer having acryloyl group and methoxy group are more preferable, and the silicone oligomer having acryloyl group and methoxy group are particularly preferable.

In addition, it is preferable to use the silicone oligomer having epoxy group and methoxy group or the silicone oligomer having glycidyl group and methoxy group, and the silicone oligomer having (meth)acryloyl group and methoxy group in combination from the viewpoint of further toughening the cured product of the adhesive composition. Among the above examples, it is more preferable to use the silicone oligomer having epoxy group and methoxy group or the silicone oligomer having acryloyl group and methoxy group in combination. However, when sufficient toughness has been already attained, it is preferable to use only the silicone oligomer having acryloyl group and methoxy group instead of using the above silicone oligomers in combination from the viewpoint of further improving the adhesive strength.

Additionally, examples of the silicone oligomer of the component (F) include, but are not particularly limited to, a compound having a structure of dimethylsiloxane, methylphenylsiloxane, diphenylsiloxane, or the like. In addition, the number average molecular weight of the silicone oligomer of the component (F) is not particularly limited, but is preferably in the range of 400 to 7,000. The number average molecular weight is a value calculated by size exclusion chromatography (polystyrene as a standard substance).

In addition, the position of the alkoxy group in the molecule of the silicone oligomer of the component (F) is not particularly limited but include a molecular chain terminal, a side chain, and the like. Among the above, a silicone oligomer having alkoxy groups at both the terminal and side chain of the molecular chain is particularly preferable because an adhesive composition is obtained that has excellent adhesive strength to dissimilar materials and produces a cured product having excellent toughness.

Examples of a commercially available product for the component (F) include, but are not particularly limited to, KR-513, X-40-9296, KR-516, and KR-517 manufactured by Shin-Etsu Chemical Co., Ltd., and the like. These may be used alone or in combination of two or more thereof.

The addition amount (blending amount) of the component (F) in an embodiment of the present invention is not particularly limited, but is preferably 3 to 200 parts by mass relative to 100 parts by mass of the component (A). In addition, the addition amount of the component (F) is preferably 5 to 150 parts by mass, and more preferably 7 to 100 parts by mass relative to 100 parts by mass of the component (A). Moreover, the addition amount of the component (F) is preferably 8 to 100 parts by mass, and more preferably 10 to 50 parts by mass relative to 100 parts by mass of the component (A). When the addition amount is set within the above range in the present invention, the cured product is made tougher, and an adhesive composition having more excellent adhesive strength to dissimilar materials is obtained.

### <Component (G)>

Further, to the adhesive composition according to an embodiment of the present invention, a filler may be added as a component (G). Moreover, the adhesive composition according to an embodiment of the present invention may preferably further contain a filler as the component (G).

Examples of the component (G) include, but are not particularly limited to, an organic powder, an inorganic powder, a metallic powder, and the like. These may be used alone or in combination of two or more thereof.

Examples of the filler of the inorganic powder include, but are not particularly limited to, silica, glass, alumina, mica, ceramics, silicone rubber powder, calcium carbonate, aluminum nitride, carbon powder, kaolin clay, clay mineral, diatomaceous earth, and the like.

The addition amount (blending amount) of the inorganic powder is not particularly limited, but is preferably about 0.01 to 500 parts by mass relative to 100 parts by mass of the component (A). In addition, the addition amount (blending amount) of the inorganic powder is more preferably in the range of 0.1 to 300 parts by mass, and still more preferably in the range of 1 to 200 parts by mass relative to 100 parts by mass of the component (A). Moreover, the addition amount (blending amount) of the inorganic powder is even still more preferably in the range of 5 to 100 parts by mass, and particularly preferably in the range of 10 to 50 parts by mass relative to 100 parts by mass of the component (A).

The above inorganic powders may be used alone or in combination of two or more thereof.

Among the fillers of the inorganic powder, the silica can be blended for the purpose of adjusting the viscosity of the adhesive composition or improving the mechanical strength of the cured product. Among silicas, a silica hydrophobized with organochlorosilanes, a polyorganosiloxane, hexamethyldisilazane, or the like and the like can be preferably used. Among the above, a silica hydrophobized with a polyorganosiloxane is more preferable, and a silica hydrophobized with polydimethylsiloxane is particularly preferable. Specific examples of the silica include commercially available products such as AEROSIL (registered trademark) R974, R972, R972V, R972CF, R805, R812, R812S, R816, R8200, RY200, RX200, RY200S, and R202 manufactured by Nippon Aerosil Co., Ltd.; CAB-O-SIL (registered trademark) TS720 manufactured by Cabot Corporation; and the like. These may be used alone or in combination of two or more thereof.

Examples of the organic powder include, but are not particularly limited to, polyethylene, polypropylene, nylon, cross-linked acryl, cross-linked polystyrene, polyester, polyvinyl alcohol, polyvinyl butyral, polycarbonate, and the like.

The addition amount (blending amount) of the organic powder is not particularly limited, but is preferably about 0.01 to 500 parts by mass relative to 100 parts by mass of the component (A). In addition, the addition amount (blending amount) of the organic powder is more preferably in the range of 0.1 to 300 parts by mass relative to 100 parts by mass of the component (A).

The above organic powders may be used alone or in combination of two or more thereof.

Examples of the metallic powder include, but are not particularly limited to, a gold powder, a silver powder, a copper powder, a nickel powder, a palladium powder, a tungsten powder, a plated powder, an alumina powder, and the like.

The addition amount of the metallic powder is preferably about 0.01 to 500 parts by mass relative to 100 parts by mass of the component (A). In addition, the addition amount (blending amount) of the metallic powder is more preferably in the range of 0.1 to 300 parts by mass relative to 100 parts by mass of the component (A).

The above metallic powders may be used alone or in combination of two or more thereof.

However, from the viewpoint of further improving the adhesive strength, it may be preferable not to use the component (G) in some cases.

### <Optional Component>

To the adhesive composition according to an embodiment of the present invention, additives can be further used such as various elastomers such as a styrene-based copolymer and the like, a storage stabilizer, an antioxidant, a light stabilizer, a rust inhibitor, a plasticizer, a solvent, a pigment, a dye, a flame retardant, a tackifier, a surfactant, and the like in the range where the object of the present invention is not impaired.

The adhesive composition according to an embodiment of the present invention may contain bisphenol A type diglycidyl-ether, bisphenol F type diglycidyl-ether, which, however, tends to cause warpage when dissimilar materials are bonded together, so that the adhesive composition is preferably substantially free of, and particularly preferably free of bisphenol A type diglycidyl-ether, bisphenol F type diglycidyl-ether. Here, the phrase "substantially free of bisphenol A type diglycidyl-ether, bisphenol F type diglycidyl-ether" means that the addition amount (blending amount) of thereof is less than 0.1 mass% relative to the total mass of the adhesive composition.

The adhesive composition according to an embodiment of the present invention may contain a photoradical polymerization initiator that generates radical species by ultraviolet rays or the like, but the adhesive composition is preferably substantially free of, and particularly preferably free of a photoradical polymerization initiator because the photoradical polymerization initiator, which is expensive, is not required to be used and bonding can be easily achieved only by heating without emitting ultraviolet rays with an irradiator or the like. Here, the phrase "substantially free of a photoradical polymerization initiator" means that the addition amount (blending amount) thereof is less than 0.1 mass% relative to the total mass of the adhesive composition.

Examples of the photoradical polymerization initiator include, but are not particularly limited to, an acetophenone-based photoradical polymerization initiator, a benzoin-based photoradical polymerization initiator, a benzophenone-based photoradical polymerization initiator, a thioxanthone-based photoradical polymerization initiator, an acylphosphine oxide-based photoradical polymerization initiator, a titanocene-based photoradical polymerization initiator, and the like.

The application of the adhesive composition according to an embodiment of the present invention is not particularly limited, but is suitable for bonding dissimilar materials together. In other words, the adhesive composition according to an embodiment of the present invention is preferably used for bonding between materials having different linear expansion coefficients. Examples of bonding dissimilar materials together include, but are not particularly limited to, bonding between materials having different linear expansion coefficients, and the like. For the bonding, the difference in linear expansion coefficient between materials having different linear expansion coefficients is not particularly limited, but is suitably 0.1 × 10⁻⁶/K to 500 × 10⁻⁶/K. In addition, the difference in linear expansion coefficient between materials having different linear expansion coefficients is preferably 0.2 × 10⁻⁶/K to 300 × 10⁻⁶/K, and particularly preferably 0.3 × 10⁻⁶/K to 50 × 10⁻⁶/K. In the present specification, the difference in linear expansion coefficient between materials having different linear expansion coefficients represents a value obtained by subtracting a thermal expansion coefficient of a material having a smaller thermal expansion coefficient from a thermal expansion coefficient of a material having a larger thermal expansion coefficient. Note that the thermal expansion coefficient can be determined by a method for measuring a linear expansion coefficient of a metal material in accordance with JIS Z 2285(2003). Specific examples of bonding of dissimilar materials include, but are not particularly limited to, bondings of metals, metal and plastic, metal and rubber, plastic and rubber, plastics, rubbers, and the like. Among the above examples, metals, metal and plastic, and plastics are preferable, and metals are more preferable.

Examples of the metal as an adherend include, but are not particularly limited to, iron, aluminum, magnesium, copper, stainless steel, titanium, and the like. Examples of the plastic as an adherend include, but are not particularly limited to, fiber reinforced plastic (FRP), carbon fiber reinforced plastic (CFRP), polyacryl, polyester, polyamide, acrylonitrile-butadiene-styrene, 6-nylon, polycarbonate, polyacetal, polyethylene terephthalate, polybutylene terephthalate, polyphenylene sulfide, polyphenylene ether, polyether ether ketone, polyethylene, polypropylene, and the like. Examples of the rubber as an adherend include, but are not particularly limited to, nitrile rubber, urethane rubber, silicone rubber, EPDM, and the like. More specific examples of bonding dissimilar materials include bonding at least two or more adherends selected from the above materials, and the like. Among the above examples, for bonding dissimilar materials, bonding between aluminum and iron, which is bonding between metals, is particularly preferable. In addition, for the bonding, the surface of each material (each adherend) described above may be surface treated in advance, or may be untreated.

### <Manufacturing Method>

The adhesive composition according to an embodiment of the present invention can be manufactured by a conventionally known method. For example, it can be manufactured by blending and mixing predetermined amounts of the above-described component (A), component (B), component (C), component (D), and the other optional components. Here, a means for mixing is not particularly limited, but for example, a mixing means such as a mixer and the like such as a planetary mixer and the like can be used. In addition, the mixing temperature is not particularly limited, but is preferably a temperature of 10 to 70°C, more preferably 20 to 50°C, and particularly preferably ordinary temperature (25°C). In addition, the mixing time is preferably 0.1 to 5 hours, more preferably 30 minutes to 3 hours, and particularly preferably around 60 minutes.

### <Applying Method>

A method for applying the adhesive composition according to an embodiment of the present invention to a substrate (e.g., an adherend) is not particularly limited, and a known adhesive applying method is used. For example, methods such as dispensing using an automatic applying equipment, spraying, inkjet, screen printing, gravure printing, dipping, spin coating, and the like can be used.

### <Curing Method and Cured Product>

Another aspect of the present invention relates to a cured product of the above-described adhesive composition. For example, another embodiment of the present invention relates to a cured product obtained by heat-curing the adhesive composition. The conditions of the heating temperature and the heating time for heating are not particularly limited as long as they are conditions enabling sufficiently curing, but for example, the heating temperature is preferably 40 to 300°C, more preferably 60 to 200°C, and particularly preferably 80 to 190°C. In addition, for example, the heating time is preferably 10 seconds to 120 minutes, more preferably 20 seconds to 60 minutes, still more preferably 30 seconds to 10 minutes, and particularly preferably about 60 seconds. Suitable specific examples of the heating condition include a condition of 80 to 190°C for 20 seconds to 60 minutes and a condition of 80 to 190°C for 20 seconds to 30 minutes.

### <Composite>

Another aspect of the present invention relates to a composite in which different materials are bonded to each other using the above-described adhesive composition. In other words, it can be said that another aspect of the present invention relates to a composite including two or more materials having different linear expansion coefficients and the cured product of the adhesive composition, and having a configuration in which two or more different materials are bonded to each other via the cured product.

### <Application>

The adhesive composition according to an embodiment of the present invention can be used in various fields such as, for example, automobile field, railroad vehicle field, aerospace field, electrical and electronic component field, construction field, civil engineering field, and the like, but the field of application is not limited to those mentioned above. Among the above fields, the automobile field is preferable for the application. The application of bonding dissimilar materials in the automobile field includes, but is not particularly limited to, caulking portion (hemming) bonding for fixing an outer panel and an inner panel, and the like. More specifically, bonding between panels constituting a door, a pillar, and a roof of an automobile, bonding between a body and a roof, and the like are included.

### EXAMPLES

Hereinafter, the present invention will be described in more detail with Examples, but the present invention is not limited to these Examples.

### <Preparation of Adhesive Composition>

The components were each taken by parts by mass shown in Table 1 below and mixed with a mixer at ordinary temperature for 60 minutes to obtain adhesive compositions. Note that the detailed addition amounts are in accordance with Table 1 below, and the numerical values of the addition amounts in the table are all expressed in parts by mass.

### <Component (A)>

a1-1: p-tert-butyl phenyl glycidyl ether (ADEKA GLYCILOL (registered trademark) ED-509E manufactured by ADEKA CORPORATION),
a2-1: 2-ethylhexyl glycidyl ether (YED188 manufactured by Mitsubishi Chemical Corporation),
a2-2: mixed higher alcohol glycidyl ether of C10 or C12 (SY-25L manufactured by Sakamoto Yakuhin Kogyo Co., Ltd.), and
a2-3: mixed higher alcohol glycidyl ether of C12 or C13 (SY-35M manufactured by Sakamoto Yakuhin Kogyo Co., Ltd.).

### <Comparative Component to Component (A)>

a'-1: bisphenol A type diglycidyl ether (JER 828 manufactured by Mitsubishi Chemical Corporation).

### <Component (B)>

b1: ethylene oxide-modified bisphenol A type diacrylate (NK ESTER BPE-80N manufactured by Shin-Nakamura Chemical Co., Ltd.),
b2: bisphenol A type epoxy diacrylate (EBECRYL (registered trademark) 3700 manufactured by Daicel-Allnex Ltd.), and
b3: dipentaerythritol hexaacrylate (KAYARAD (registered trademark) DPHA manufactured by Nippon Kayaku Co., Ltd.).

### <Component (C)>

c-1-1: an epoxy adduct-type latent curing agent having a softening point of 120°C and an average particle size of 9 µm, obtained using a tertiary amine compound (AMICURE MY-24 manufactured by Ajinomoto Fine-Techno Co., Inc., reaction product of epoxy and amine);
c-1-2: an epoxy adduct-type latent curing agent having a softening point of 100°C and an average particle size of 11 µm, obtained using an imidazole compound (AMICURE PN-23 manufactured by Ajinomoto Fine-Techno Co., Inc.);
c-2-1: 1,3-bis(hydrazinocarbonoethyl)-5-isopropylhydantoin (AMICURE UDH manufactured by Ajinomoto Fine-Techno Co., Inc.);
c-3-1: DBU phenol novolac resin salt (U-CAT SA841 manufactured by Sanyo Chemical Industries, Ltd.);
c-4-1: boron trifluoride monoethylamine (manufactured by Stella Chemifa Corporation); and
c-4-2: a thermal cationic polymerization initiator containing a salt composed of a tetrakis(pentafluorophenyl)borate anion and a cation (K-PURE (registered trademark) CXC-1821 manufactured by King Industries, Inc.).

### <Comparative Component to Component (C)>

c'1: a urea adduct-type latent curing agent having a softening point of 120°C and an average particle size of 7 µm, obtained using a secondary amine compound (Fujicure (registered trademark) FXE-1000 manufactured by T&K TOKA Co., Ltd.).

### <Component (D)>

d1: t-butylperoxybenzoate having a 1-hour half-life temperature of 124.7°C (PERBUTYL (registered trademark) Z manufactured by NOF CORPORATION).

### <Component (E)>

e1: isobornyl methacrylate (Acryester IBX manufactured by Mitsubishi Rayon Co., Ltd.),
e2: 2-hydroxyethyl methacrylate (Acryester HO manufactured by Mitsubishi Rayon Co., Ltd.),
e3: isobornyl acrylate (IBXA manufactured by Osaka Organic Chemical Industry Ltd.), and
e4: 2-hydroxyethyl acrylate (4-HBA manufactured by Osaka Organic Chemical Industry Ltd.).

### <Component (F)>

f1: a silicone oligomer having acryloyl groups and methoxy groups located at both the terminals and side chains of the molecular chain (KR-513 manufactured by Shin-Etsu Chemical Co., Ltd.), and
f2: a silicone oligomer having epoxy groups and methoxy groups located at both the terminals and side chains of the molecular chain (KR-516 manufactured by Shin-Etsu Chemical Co., Ltd.).

### <Component (G)>

g1: a silica surface-modified with polydimethylsiloxane (CAB-O-SIL (registered trademark) TS720 manufactured by Cabot Corporation).

Test methods of tests (1) and (2) used for Examples and Comparative Examples in Table 1 below are as follows.

### <(1) Warpage Test after Heat-Curing in Sticking Aluminum and Iron (SPCC-SD)>

An adhesive composition was applied to the entire surface of an aluminum (A601P) test piece (25 × 150 × 1.5 mm) having a linear expansion coefficient of 23.6 × 10⁻⁶/K so as to have a thickness of 0.2 mm. Thereafter, another test piece (25 × 150 × 1 mm) made of iron (SPCC-SD) having a linear expansion coefficient of 11.7 × 10⁻⁶/K was stuck to the aluminum test piece to which the adhesive composition had been applied, and the obtained laminate was fixed with a clip. Then, curing was performed under the condition of 60 minutes in a hot air-drying furnace set at 170°C to obtain a test specimen. The test specimen was a composite including the aluminum test piece, the iron test piece, and the cured product of the adhesive composition, and having a configuration in which the aluminum test piece and the iron test piece are bonded to each other via the cured product.

After cooling the test specimen to 25°C, one side in the longitudinal orientation was fixed as shown in FIG. 1, and the warpage height (mm) of the opposite side was measured. The results are shown in Table 1 below.

Note that, in sticking the plates of dissimilar materials in this test, the warpage was estimated to be preferable for 3.0 mm or less, more preferable for 2.5 mm or less, and particularly preferable for 2.0 mm or less.

### <(2) Tensile Shear Adhesive Strength Test>

An adhesive composition was applied to an iron (SPCC-SD) test piece having a linear expansion coefficient of 11.7 × 10⁻⁶/K at a width of 25 mm × a length of 100 mm × a thickness of 1 mm. Thereafter, another iron (SPCC-SD) test piece having a linear expansion coefficient of 11.7 × 10⁻⁶/K was stuck to the iron test piece to which the adhesive composition had been applied so that the overlap area was 25 mm × 10 mm, and the obtained laminate was fixed with a clip. Then, curing was performed under the condition of 60 minutes in a hot air-drying furnace set at 170°C to obtain a specimen. The specimen was a composite including the two iron test pieces and the cured product of the adhesive composition, and having a configuration in which the two iron test pieces are bonded to each other via the cured product. Then, using the specimen, the shear adhesive strength (unit: MPa) was measured at 25°C with a universal tensile tester (pulling speed: 10 mm/min.) according to JIS K 6850 (JIS K 6850: 1999). The results are shown in Table 1 below.

Note that, for the use as the structural adhesive in this test, the shear adhesive strength was estimated to be preferable for 2.5 MPa or more, more preferable for 3.0 MPa or more, and still more preferable for 3.2 MPa or more.

Note that, in the following Table 1, a blank for a component indicate that the addition amount is 0 parts by mass, that is, the component is not contained.

**[Table 1]**

| | Example 1 | Example 2 | Example 3 | Example 4 | Example 5 | Example 6 | Example 7 | Example 8 | Example 9 | Example 10 | Example 11 | Example 12 | Example 13 | Example 14 | Example 15 | Example 16 | Example 17 | Example 18 | Comparative Example 1 | Comparative Example 2 |
|---|---|---|---|---|---|---|---|---|---|---|---|---|---|---|---|---|---|---|---|---|
| a1-1 | 10 | | | | 9 | 8 | 7 | 5 | 5 | 5 | 5 | 7 | 7 | 7 | 7 | 5 | 7 | 7 | | 5 |
| a2-1 | | 10 | | | 1 | 2 | 3 | 5 | | | | 3 | 3 | 3 | 3 | | 3 | 3 | | |
| a2-2 | | | 10 | | | | | | 5 | | | | | | | | | | | |
| a2-3 | | | | 10 | | | | | | 5 | 5 | | | | | 5 | | | | 5 |
| a-'1 | | | | | | | | | | | | | | | | | | | 10 | |
| b1 | 7.5 | 7.5 | 7.5 | 7.5 | 7.5 | 7.5 | 7.5 | 7.5 | 7.5 | 7.5 | | 7.5 | 7.5 | 7.5 | 7.5 | 7.5 | 7.5 | 7.5 | 7.5 | 7.5 |
| b2 | | | | | | | | | | | 7.5 | | | | | | | | | |
| b3 | 0.1 | 0.1 | 0.1 | 0.1 | 0.1 | 0.1 | 0.1 | 0.1 | 0.1 | 0.1 | 0.1 | 0.1 | 0.1 | 0.1 | 0,1 | 0.1 | 0.1 | 0.1 | 0.1 | 0.1 |
| c-1-1 | | | | | | | | | | | | 1 | | | | | | | | |
| c-1-2 | | | | | | | | | | | | | 1 | | | | | | | |
| c-2-1 | | | | | | | | | | | | | | 1 | | | | | | |
| c-3-1 | 5 | 5 | 5 | 5 | 5 | 5 | 5 | 5 | 5 | 5 | 5 | | | | 5 | 5 | | | 5 | |
| c-4-1 | | | | | | | | | | | | | | | | | 1 | | | |
| c-4-2 | | | | | | | | | | | | | | | | | | 0.2 | | |
| c'1 | | | | | | | | | | | | | | | | | | | | 5 |
| d1 | 0.05 | 0.05 | 0.05 | 0.05 | 0.05 | 0.05 | 0.05 | 0.05 | 0.05 | 0.05 | 0.05 | 0.05 | 0.05 | 0.05 | 0.05 | 0.05 | 0.05 | 0.05 | 0.05 | 0.05 |
| e1 | 1 | 1 | 1 | 1 | 1 | 1 | 1 | 1 | 1 | 1 | | 1 | 1 | 1 | 1 | 1 | 1 | 1 | 1 | 1 |
| e2 | 1 | 1 | 1 | 1 | 1 | 1 | 1 | 1 | 1 | 1 | | 1 | 1 | 1 | 1 | 1 | 1 | 1 | 1 | 1 |
| e3 | | | | | | | | | | | 1 | | | | | | | | | |
| e4 | | | | | | | | | | | 1 | | | | | | | | | |
| f1 | 0.4 | 0.4 | 0.4 | 0.4 | 0.4 | 0.4 | 0.4 | 0.4 | 0.4 | 0.4 | 0.4 | 0.4 | 0.4 | 0.4 | 0.4 | 0.4 | 0.4 | 0.4 | 0.4 | 0.4 |
| f2 | 1 | 1 | 1 | 1 | 1 | 1 | 1 | 1 | 1 | 1 | | 1 | 1 | 1 | | 1 | 1 | 1 | 1 | 1 |
| g1 | 3.5 | 3.5 | 3.5 | 3.5 | 3.5 | 3.5 | 3.5 | 3.5 | 3.5 | 3.5 | 3.5 | 3.5 | 3.5 | 3.5 | 3.5 | | 3.5 | 3.5 | 3.5 | 3.5 |
| Aluminum/iron (SPCC-SD) | 1 | 0 | 2 | 2.5 | 0 | 0 | 0 | 0 | 0 | 0 | 0 | 0 | 0 | 0 | 0 | 0 | 0 | 0 | 7 | 0 |
| Warpage test after heat-curing (mm) | | | | | | | | | | | | | | | | | | | | |
| Tensile shear adhesive strength (MPa) | 3.6 | 3.5 | 3 | 3.6 | 3.4 | 4.9 | 7.3 | 4.2 | 5.1 | 4.8 | 5.3 | 5.0 | 5.8 | 3.1 | 8.2 | 6.2 | 4.6 | 4.4 | 13.1 | 0.5 |

According to Examples 1 to 18 in Table 1 shown above, it is found that the present invention provides adhesive compositions that cause less warpage when dissimilar materials are bonded together, and have excellent adhesive strength.

In addition, Comparative Example 1 in Table 1 shown above is an adhesive composition containing bisphenol A type diglycidyl ether instead of the component (A) of the invention of the present application, and is found to have a warpage of 7 mm, which is poor.

Moreover, Comparative Example 2 in Table 1 shown above is an adhesive composition containing an epoxy resin adduct-type latent curing agent having a softening point of 120°C and an average particle size of 7 µm instead of the component (C) of the invention of the present application, and is found to be poor in tensile shear adhesive strength.

Further, in order to confirm the hardness of cured products, (3) test of elastic modulus described later was performed. A composition prepared as below was used as an adhesive composition according to Comparative Example 3. Note that the adhesive composition according to Comparative Example 3 is a one-pack curable epoxy resin composition in which an elastomer is dispersed and corresponds to the one from a conventional technique.

### <Preparation of Composition of Comparative Example 3>

For Comparative Example 3 as a composition, 60 parts by mass of bisphenol A type diglycidyl ether (JER828 manufactured by Mitsubishi Chemical Corporation), 40 parts by mass of carboxyl group-terminated butadienenitrile rubber, 4 parts by mass of DBU phenol novolac resin salt (U-CAT SA841 manufactured by Sanyo Chemical Industries, Ltd.), and 8 parts by mass of dicyandiamide were added, and mixed at ordinary temperature for 60 minutes with a planetary mixer to obtain the composition.

Additionally, using the composition according to Comparative Example 3, "(1) warpage test after heat-curing in sticking aluminum and iron" described above was performed, and the result showed that the warpage was 6.5 mm, which was poorer than that of the present invention.

### <(3) Measurement of Elastic Modulus>

The adhesive composition according to Example 7 and the obtained composition according to Comparative Example 3 were each poured into a jig that was set so as to have a thickness of 0.5 mm. Thereafter, these compositions were cured under the condition of 170°C × 60 minutes to prepare cured products, and strip-shaped test pieces of 10 mm × 50 mm × 0.2 mm were prepared.

Next, for these test pieces, the storage elastic modulus E' at 25°C was measured using a dynamic viscoelasticity measuring device DMS6100 (manufactured by Seiko Instruments Inc.). The results of measurement of the storage elastic modulus E' were 1 × 10⁸ Pa for the cured product of the adhesive composition of Example 7 and 9.2 × 10⁸ Pa for the cured product of the composition of Comparative Example 3. From these results, it was found that the cured product of the composition of Comparative Example 3 had a higher elastic modulus and was harder, and the cured product of the adhesive composition of Example 7 was softer.

As compared with the adhesive composition according to Example 7 of the present invention, the composition of Comparative Example 3 corresponding to a conventional technique is not suitable as an adhesive for bonding dissimilar materials because the cured product is hard and warpage disadvantageously occurs when dissimilar materials are bonded together.

### Industrial Applicability

The present invention relates to an adhesive composition that causes less warpage when dissimilar materials are bonded together, and has excellent adhesive strength. The adhesive composition according to the present invention can be used as an adhesive in various fields including an automobile field. Accordingly, the adhesive composition according to the present invention is industrially useful.

The present application is based on JP A 2019-050094 filed on March 18, 2019, the disclosure of which is incorporated by reference in its entirety.

### Reference Signs List

- 1: Aluminum plate
- 2: Iron (SPCC-SD) plate

## Claims

1. An adhesive composition comprising:
a component (A) that is a monofunctional epoxy resin;
a component (B) that is a polyfunctional radically polymerizable compound;
a component (C) that is a curing agent; and
a component (D) that is a thermal radical initiator,
the component (C) being one or more selected from the group consisting of a component (c-1) that is an epoxy adduct-type latent curing agent, a component (c-2) that is a hydrazide compound, a component (c-3) that is a cyclic amidine salt, and a component (c-4) that is a thermal cationic polymerization initiator.

2. The adhesive composition according to claim 1, comprising 5 to 200 parts by mass of the component (B) relative to 100 parts by mass of the component (A).

3. The adhesive composition according to claim 1 or 2, wherein the component (B) is a polyfunctional (meth)acrylate compound.

4. The adhesive composition according to any one of claims 1 to 3, wherein the component (A) contains at least one of a component (a-1) that is a monofunctional epoxy resin having an aromatic ring or cyclohexyl in its molecular structure and a component (a-2) that is a monofunctional epoxy resin having a linear or branched alkyl group with 7 to 25 carbon atoms.

5. The adhesive composition according to claim 4, wherein the component (A) contains the component (a-1) and the component (a-2).

6. The adhesive composition according to claim 5, wherein the component (A) contains 20 to 98 parts by mass of the component (a-1) relative to 100 parts by mass of a total amount of the component (a-1) and the component (a-2).

7. The adhesive composition according to any one of claims 1 to 6, further comprising a monofunctional radically polymerizable compound as a component (E).

8. The adhesive composition according to any one of claims 1 to 7, further comprising a silane coupling agent as a component (F).

9. The adhesive composition according to claim 8, wherein the component (F) is a silicone oligomer-based silane coupling agent.

10. The adhesive composition according to any one of claims 1 to 9, further comprising a filler as a component (G).

11. The adhesive composition according to any one of claims 1 to 10, being free of a photoradical initiator.

12. The adhesive composition according to any one of claims 1 to 11, being used for bonding between materials having different linear expansion coefficients.

13. The adhesive composition according to claim 12, wherein a difference in linear expansion coefficient between the materials having different linear expansion coefficients is 0.1 × 10⁻⁶/K to 500 × 10⁻⁶/K.

14. A cured product of the adhesive composition according to any one of claims 1 to 13.

15. A composite comprising two or more materials having different linear expansion coefficients and the cured product of the adhesive composition according to claim 14, and having a configuration such that the two or more different materials are bonded to each other via the cured product.
